# EUROPEAN PATENT APPLICATION

(11) **EP 1 424 406 A1**
(43) Date of publication of application: **02.06.2004**
(21) Application number: 01958391.3
(22) Date of filing: 22.08.2001
(51) Int. Cl.: C25D 1/02

(54) **ELECTROFORMING APPARATUS AND ELECTROFORMING METHOD**

(71) Applicant: Optical Forming Corporation, Kurume-shi, Fukuoka 830-0048 (JP); Inou Co., Ltd., Fukuoka 839-0862 (JP)
(72) Inventor: ODA, Tokuji, Kurume-shi, Fukuoka 830-0037 (JP); ICHIKAWA, Yutaka, Mizuma-gun, Fukuoka 830-0211 (JP)
(74) Representative: HOFFMANN - EITLE
(86) International application number: PCT/JP2001/007176
(87) International publication number: WO 2003/018879

(57) **Abstract**

An electroforming apparatus and an electroforming method that are capable of performing high-precision electroforming are provided. An electroforming tank 1 accommodated in an outer tank 2 is continuously supplied with an electrolyte 3 from a control tank 5, and electroforming is carried out in an overflow layer 10 of electrolyte 3 formed over the electroforming tank 1. A bus 25 for electroforming that is retained by a retaining jig 30 is carried along the overflow layer 10 by a jig transfer device 20. The electrolyte 3 overflowing the electroforming tank 1 is collected into a control tank 5 from the outer tank 2 and supplied to the electroforming tank 1 again after being filtered.

## Description

### TECHNICAL FIELD TO WHICH THE INVENTION PERTAINS

The present invention relates to an electroforming apparatus and an electroforming method. More particularly, the present invention relates to an apparatus and method for producing, by electroforming, tubular members (known as "ferrules") that may be used in connector terminal portions for connecting optical fibers or the like.

### BACKGROUND OF THE INVENTION

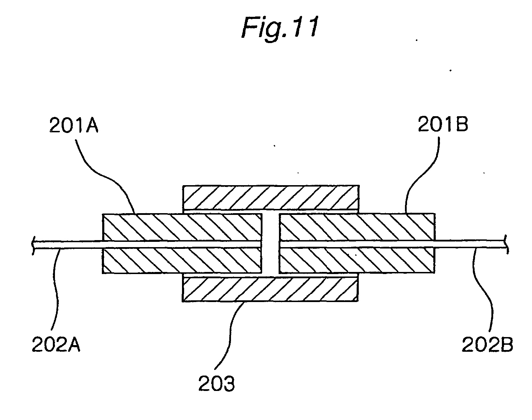

In connector terminal portions of optical fiber cables, tubular members (known as "ferrules") are used to secure optical fibers, which are to be connected to each other, coaxially at a predetermined position. Fig. 11 shows an example of connection of optical fibers using such ferrules. As illustrated in the figure, optical fibers 202A and 202B are inserted into ferrules 201A and 201B, respectively. The ferrules 201A and 201B are fitted into a sleeve 203 and disposed so that respective ends of the optical fibers 202A and 202B face each other.

Ferrules made of ceramics have heretofore been used as those stated above. However, ceramic ferrules are difficult to machine and cost a great deal to produce. Under these circumstances, a method of producing metallic ferrules by electroforming is proposed in the publications of WO00/31574, WO01/48271, Japanese Patent Application Unexamined Publication (KOKAI) Nos. Sho 59-3859 and Hei 12-162470, etc. In such an electroforming type ferrule producing apparatus, for example, a wire serving as a pattern member for electroforming is placed in an electrolyte filled in an electroforming tank to perform electroforming.

Incidentally, connection of optical fibers needs to be made with an extremely high degree of accuracy. Accordingly, ferrules used for the optical fiber connection require extremely high quality in terms of dimensions (accuracy in units of micrometers or less is required). With the above-described conventional ferrule producing apparatus, however, it is difficult to obtain a uniform electroforming fluid throughout the electroforming tank even if the electroforming fluid is stirred. For this reason, the current density around the wire cannot accurately be controlled. Consequently, errors occur in the coaxiality of an electroformed piece formed around the wire (i.e. the coaxiality between the tubular external shape of the electroformed piece and the hollow portion thereof), linearity thereof, the roundness of the sections of the external shape and the hollow portion of the electroformed piece, etc. Therefore, the electroformed piece has to be subjected to troublesome fabrication process using a precision machine (e.g. a wire centerless apparatus). Further, because a retaining member for retaining at least one end of the wire unavoidably needs to be immersed in the electrolyte, the retaining member undesirably reacts with the electrolyte to generate impurities. Thus, it is difficult to control the electrolyte, and the retaining member itself is damaged unfavorably. Furthermore, to effect electroforming of good quality, filtration control of the electrolyte is indispensable. However, it has heretofore been difficult to filter the electrolyte rationally.

The present invention was made in view of the above-described problems, and it is an object of the present invention to provide an electroforming apparatus and an electroforming method that are capable of satisfactorily performing the electroforming process requiring extremely high accuracy.

Another object of the present invention is to provide an electroforming apparatus and an electroforming method that are capable of minimizing the generation of impurities in the electrolyte for electroforming.

Still another object of the present invention is to provide an electroforming apparatus and an electroforming method that are capable of rationally filtering the electrolyte for electroforming.

### DISCLOSURE OF THE INVENTION

An electroforming apparatus according to the present invention includes an electroforming tank (e.g. an electroforming tank 1 or 101) having an opening at the top thereof; electrolyte supply means (e.g. supply piping 4, a control tank 5, and a circulating pump 6) for supplying an electrolyte for electroforming into the electroforming tank; an overflow layer (e.g. an overflow layer 10 or 110) formed over the opening of the electroforming tank by the electrolyte overflowing from the opening; positioning means (e.g. a jig transfer device 20, and a retaining jig 30) for positioning a pattern member (e.g. a bus 25 or 125) for electroforming in the overflow layer; a first electrode (e.g. electrodes 36 and 38) connected to the pattern member; a second electrode (e.g. an anode electrode 54) provided in the electroforming tank; and a power supply (e.g. a programmable power supply 53) for applying a voltage between the first and second electrodes. Thus, electroforming is performed in the overflow layer where the condition of the electrolyte is substantially uniform throughout (i.e. free from nonuniformity of the electrolyte composition which would otherwise be caused by impurities). Therefore, it is possible to prevent degradation or variation of the geometric accuracy of the electroformed piece due to nonuniformity of the current density in the electrolyte and hence possible to produce high-precision electroformed pieces in high yield. For example, in the production of a tubular member (e.g. a ferrule 71, 72, 181 or 182) for a connector terminal for connecting optical fibers or the like as an electroformed piece, it is possible to markedly improve the coaxiality between the external shape of the tubular member and the hollow portion thereof, linearity of the tubular member, the roundness of the sections of the external shape and the hollow portion of the tubular member, the dimensional accuracy of the outer diameter of the tubular member and the inner diameter of the hollow portion, etc. Accordingly, the fabrication process required to increase the accuracy of the tubular member (e.g. the degree of coaxiality, and the outer diameter) can be reduced to a considerable extent. Consequently, high-precision tubular members (ferrules) can be provided at reduced costs. Further, because electroforming can be effected as long as there is a sufficient amount of electrolyte to form an overflow layer, the amount of electroforming fluid required is favorably small.

Further, in the electroforming apparatus according to the present invention, the positioning means has a retaining portion (e.g. bus retaining jigs 34A and 34B) for retaining the pattern member. The retaining portion is provided outside the overflow layer. Thus, the retaining portion is disposed outside the overflow layer, that is, outside the electrolyte. When a wire is used as a pattern member, for example, both ends of the wire can be retained at both outer sides of the overflow layer while a predetermined tension is being applied to the wire. Accordingly, the retaining portion is not immersed in the electrolyte, and it is therefore possible to prevent the retaining portion from reacting with the electrolyte to generate impurities in the electrolyte. In addition, there is no possibility of the electrolyte being carried away to the outside by the retaining portion. Thus, it is possible to prevent the electrolyte from uselessly disappearing from the electroforming tank.

Further, in the electroforming apparatus according to the present invention, the first electrode is provided on the retaining portion of the positioning means. Thus, the first electrode can be prevented from being immersed in the electrolyte. Consequently, the maintenance of the electrode is facilitated.

Further, in the electroforming apparatus according to the present invention, the positioning means retains a plurality of pattern members and moves the pattern members sequentially along the overflow layer to perform electroforming. Thus, a plurality of electroformed pieces are formed around the pattern members moving through the overflow layer in the same way. Therefore, the electroformed pieces are formed under the same conditions. Accordingly, uniform electroformed pieces can be mass-produced.

Further, in the electroforming apparatus according to the present invention, electrical connection between the first electrode and the pattern members can be ON-OFF controlled for each pattern member. Thus, despite the fact that electroforming is performed simultaneously on a plurality of pattern members, the electroforming process can be appropriately controlled for each individual pattern member. Accordingly, the accuracy of electroforming can be improved, and it is possible to eliminate variations among a plurality of electroformed pieces thus produced.

Further, the electroforming apparatus according to the present invention includes rotating means (e.g. a driving motor 42) for rotating the pattern member about its own axis. Thus, when a tubular electroformed piece is to be formed around a wire serving as a pattern member, for example, it is possible to perform electroforming uniform in the circumferential direction. Accordingly, in the production of a tubular member for a connector terminal for connecting optical fibers or the like as an electroformed piece, the degree of coaxiality between the external shape of the tubular member and the hollow portion thereof can be increased markedly.

Further, the electroforming apparatus according to the present invention includes adjusting means (e.g. a horizontal adjuster device 11) for adjusting the tilt of the electroforming tank. Thus, a substantially horizontal overflow layer can be formed over the electroforming tank by adjusting the tilt of the electroforming tank. Hence, the uniformity of the electrolyte condition in the overflow layer can be improved.

Further, the electroforming apparatus according to the present invention includes collecting means for collecting the electrolyte overflowing the electroforming tank, and filter means (e.g. a filter 9) for filtering the electrolyte collected by the collecting means. The electrolyte supply means supplies the electroforming tank with the electrolyte filtered through the filter means. Thus, the electrolyte in the electroforming tank is constantly replaced with a high-purity electrolyte rationally. In addition, because the electrolyte is recycled, the electroforming tank need not be replenish with the electrolyte externally, and the costs can be reduced correspondingly.

Further, in the electroforming apparatus according to the present invention, the collecting means has an outer tank (e.g. an outer tank 2) accommodating the electroforming tank. Thus, the electrolyte overflowing the electroforming tank can be collected easily and reliably.

Further, the electroforming apparatus according to the present invention includes shaping means for shaping an electroformed piece formed around the periphery of the pattern member at an end of the overflow layer by controlling the flow rate of the electrolyte at the end of the overflow layer. Thus, the electroformed piece can be shaped easily. The shaping means may have a control plate (e.g. a control plate 160) for blocking the flow of the electrolyte.

Further, in the electroforming apparatus according to the present invention, the electroformed piece is shaped into a predetermined configuration by the shaping means, and electroforming is further performed by using the electroformed piece (e.g. a primarily electroformed piece 161) as a pattern member. Thus, the configuration of the hollow portion of the electroformed piece can be formed easily and accurately. For example, in the production of a tubular member for a connector terminal for connecting optical fibers or the like, the hollow portion can be formed with a spot-faced configuration (e.g. a spot-faced portion 181A, 182A or 182B) with high accuracy. Accordingly, a spot-faced configuration or the like can be provided without the need to carry out fabrication process. Hence, the production cost can be reduced.

Further, in the electroforming apparatus according to the present invention, the electroformed piece formed around the periphery of the pattern member can be separated from the pattern member within the electrolyte. Thus, the operation (removal operation) of separating the electroformed piece from the pattern member can be performed smoothly. In other words, when the electroformed piece is separated from the pattern member after the electroformed piece and the pattern member have been taken out from the electrolyte, agents or the like attached to the electroformed piece and the pattern member may become solidified on drying, which may interfere with the separating operation. When there is a change in volumetric capacity of each of the electroformed piece and the pattern member due to a temperature change, because the electroformed piece and the pattern member differ in the coefficient of thermal expansion, there is dimensional disagreement between the electroformed piece and the pattern member. Accordingly, it may be difficult to separate the pattern member and the electroformed piece from each other. In contrast, when separation is performed within the electrolyte, because the environmental conditions where the electroformed piece and the pattern member are placed are the same as those during the electroforming process, neither solidification of agents or the like on drying nor dimensional disagreement between the electroformed piece and the pattern member will occur. Accordingly, the separating operation can be conducted smoothly.

Further, the electroforming apparatus according to the present invention includes a reflector (e.g. a reflector 55) provided under the second electrode. Thus, the current density produced in the overflow layer can be appropriately adjusted.

In an electroforming method according to the present invention, an overflow layer is formed by an electrolyte overflowing an electroforming tank, and electroforming is performed in the overflow layer. Thus, because electroforming is performed in the overflow layer where the condition of the electrolyte is uniform throughout, it is possible to perform high-precision electroforming with high yield. In addition, because electroforming can be effected as long as there is a sufficient amount of electrolyte to form an overflow layer, the amount of electroforming fluid required is favorably small.

Further, in the electroforming method according to the present invention, a pattern member for electroforming is retained outside the overflow layer. Thus, a member for retaining the pattern member is not immersed in the electrolyte, and it is therefore possible to minimize the generation of impurities in the electrolyte. In addition, there is no possibility of the electrolyte being carried away to the outside by the member for retaining the pattern member. Thus, it is possible to prevent the electrolyte from uselessly disappearing from the electroforming tank.

Further, in the electroforming method according to the present invention, a plurality of pattern members for electroforming are sequentially moved along the overflow layer to perform electroforming. Thus, electroformed pieces can be formed around the plurality of pattern members under the same conditions. Accordingly, uniform electroformed pieces can be mass-produced.

Further, in the electroforming method according to the present invention, the pattern member for electroforming is rotated about its own axis to perform electroforming. Thus, when a tubular electroformed piece is to be formed around a wire serving as a pattern member, for example, it is possible to perform electroforming uniform in the circumferential direction.

Further, in the electroforming method according to the present invention, the electrolyte overflowing the electroforming tank is collected, and the collected electrolyte is filtered, and further the filtered electrolyte is supplied into the electroforming tank to form the overflow layer. Thus, the electrolyte in the electroforming tank is constantly replaced with a high-purity electrolyte rationally. In addition, because the electrolyte is recycled, the electroforming tank need not be replenish with the electrolyte externally, and the costs can be reduced correspondingly.

Further, in the electroforming method according to the present invention, an electroformed piece formed at an end of the overflow layer is shaped by controlling the flow rate of the electrolyte at the end of the overflow layer. Thus, the electroformed piece can be shaped easily.

Further, in the electroforming method according to the present invention, the electroformed piece is shaped into a predetermined configuration, and electroforming is further performed by using the electroformed piece shaped as a pattern member. Thus, the configuration of the hollow portion of the electroformed piece (e.g. a spot-faced configuration of the hollow portion of a tubular member for a connector terminal for connecting optical fibers or the like) can be formed easily and accurately.

Further, in the electroforming method according to the present invention, the electroformed piece formed around the periphery of the pattern member is separated from the pattern member within the electrolyte. Thus, the electroformed piece is separated (removed) from the pattern member under the same conditions as those during the electroforming process. Therefore, the removal operation can be conducted smoothly. That is, there is no likelihood that agents or the like attached to the electroformed piece and the pattern member may become solidified on drying, or the dimensions of the electroformed piece and the pattern member may change owing to a temperature change, as in the case of separating the electroformed piece from the pattern member after the electroformed piece and the pattern member have been taken out from the electrolyte. Therefore, there is no possibility of the separating operation becoming difficult to conduct. Furthermore, the operation of separating the electroformed piece and the pattern member from each other is executed subsequently to the electroforming process, and there is no need to provide a step for separating the electroformed piece and the pattern member from each other after the electroformed piece has been taken out from the electrolyte. Therefore, the number of steps required for the production process can be reduced. Hence, cost reduction can be achieved.

### BRIEF DESCRIPTION OF THE DRAWINGS

Fig. 1 is a sectional view showing an electroforming apparatus in a first embodiment of the present invention.
Fig. 2 is a structural view showing the electroforming apparatus in the first embodiment of the present invention.
Fig. 3 is a perspective view showing a retaining jig.
Fig. 4 is a perspective view showing the way in which a bus is fitted to an electrode.
Fig. 5 is a diagram showing the way in which a reflector is placed in an electroforming tank, of which: part (A) shows an arrangement in which a concave reflector is placed; and part (B) shows an arrangement in which a convex reflector is placed.
Fig. 6 is a diagram showing an electroforming procedure.
Fig. 7 is a sectional view showing examples of ferrules produced by the first embodiment of the present invention.
Fig. 8 is a diagram showing an electroforming apparatus according to a second embodiment of the present invention.
Fig. 9 is a diagram showing the control of the electrolyte flow rate by a control plate.
Fig. 10 is a sectional view showing examples of ferrules produced by the second embodiment of the present invention.
Fig. 11 is a sectional view showing an example of connection of optical fibers with ferrules.

### PREFERRED MODE FOR CARRYING OUT THE INVENTION

Embodiments of the present invention will be described below on the basis of the accompanying drawings.

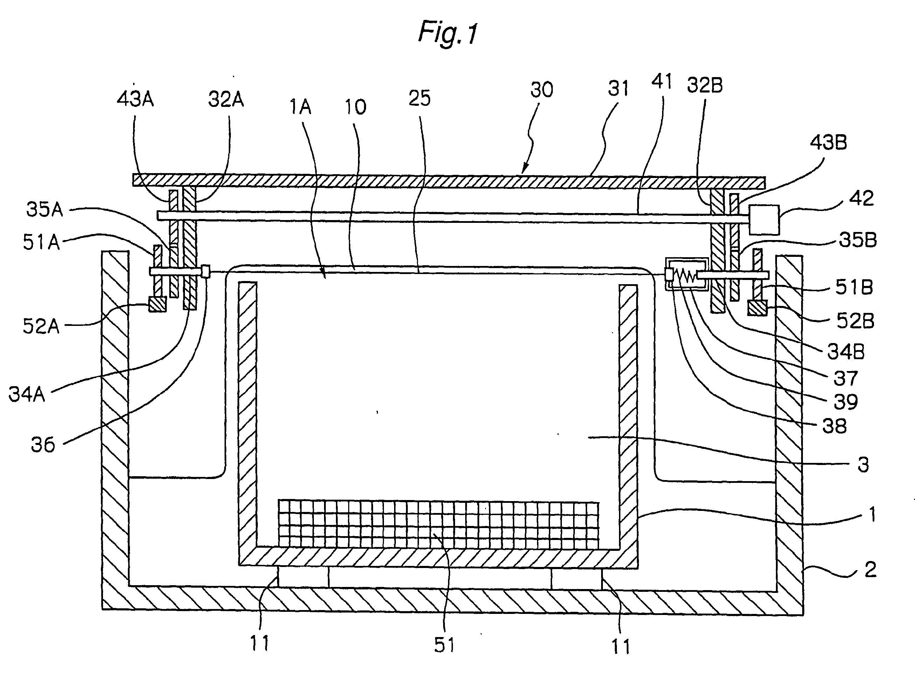

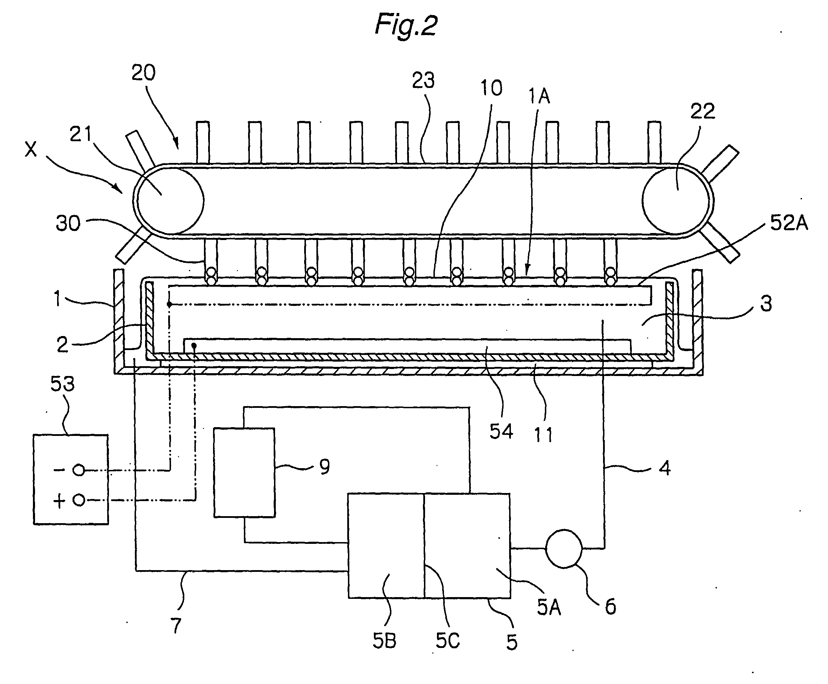

Figs. 1 and 2 show an electroforming apparatus according to a first embodiment of the present invention.

As illustrated in the figures, the electroforming apparatus has an electroforming tank 1 and an outer tank 2 accommodating the electroforming tank 1. The electroforming tank 1 is a vessel having an opening at the top thereof. The electroforming tank 1 is filled with an electrolyte (electroforming fluid) 3. Thus, the electrolyte 3 overflowing the electroforming tank 1 flows into the outer tank 2. As the electrolyte, for example, a nickel sulfamate solution mixed with a brightener and a pit-preventing agent may be used.

Supply piping 4 is connected to the electroforming tank 1. Through the supply piping 4, the electrolyte 3 is supplied to the electroforming tank 1 from a supply chamber 5A of a control tank 5 by a circulating pump 6. Meanwhile, discharge piping 7 is connected to the outer tank 2. The electrolyte 3 in the outer tank 2 is collected into a collecting chamber 5B of the control tank 5 through the discharge piping 7.

The supply chamber 5A and the collecting chamber 5B of the control tank 5 are partitioned from each other by an electrolyte isolating plate 5C. The electrolyte 3 containing impurities, which has been collected into the collecting chamber 5B, is supplied to the supply chamber 5A after it has been filtered through a filter 9. The electrolyte 3 in the supply chamber 5A is appropriately controlled in terms of electrolyte temperature, hydrogen ion concentration, hardness, etc. For example, the electrolyte temperature is adjusted to 50±1°C. The hydrogen ion concentration is adjusted to 4.2±0.2 pH. The hardness of the electrolyte 3 is appropriately adjusted by controlling the amount of brightener added.

From the supply chamber 5A, the filtered and appropriately controlled electrolyte 3 is continuously supplied to the electroforming tank 1. As a result, the electrolyte 3 is constantly overflowing the electroforming tank 1 from the opening 1A at the top thereof. The electrolyte 3 above the opening 1A of the electroforming tank 1 (i.e. the electrolyte 3 overflowing the electroforming tank 1) forms an overflow layer 10. As will be described later, in this electroforming apparatus, electroforming is performed in the overflow layer 10, whereby the accuracy of electroforming can be increased. The electrolyte 3 used for electroforming and containing impurities overflows into the outer tank 2 and is collected into the collecting chamber 5B of the control tank 5 and then filtered.

A horizontal adjuster device 11 is provided under the electroforming tank 1. The horizontal adjuster device 11 maintains the electroforming tank 1 in a substantially horizontal position. Thus, a substantially horizontal overflow layer 10 is formed over the whole area of the top of the electroforming tank 1, so that the electrolyte is uniformly distributed throughout the overflow layer 10.

A jig transfer device 20 (not shown in Fig. 1) is provided above the electroforming tank 1. The jig transfer device 20 has a pair of rollers 21 and 22 and a belt 23 passed around the rollers 21 and 22. The belt 23 circulates along the longitudinal direction (horizontal direction in Fig. 2) of the electroforming tank 1.

A plurality of retaining jigs 30 are secured to the outer periphery of the belt 23. A bus 25 is loaded onto each retaining jig 30. The bus 25 is a wire serving as a pattern member for electroforming. It should be noted that in Fig. 2 the belt 23 is circulating counterclockwise, and the operation of loading a bus 25 onto each retaining jig 30 is carried out at a loading position X.

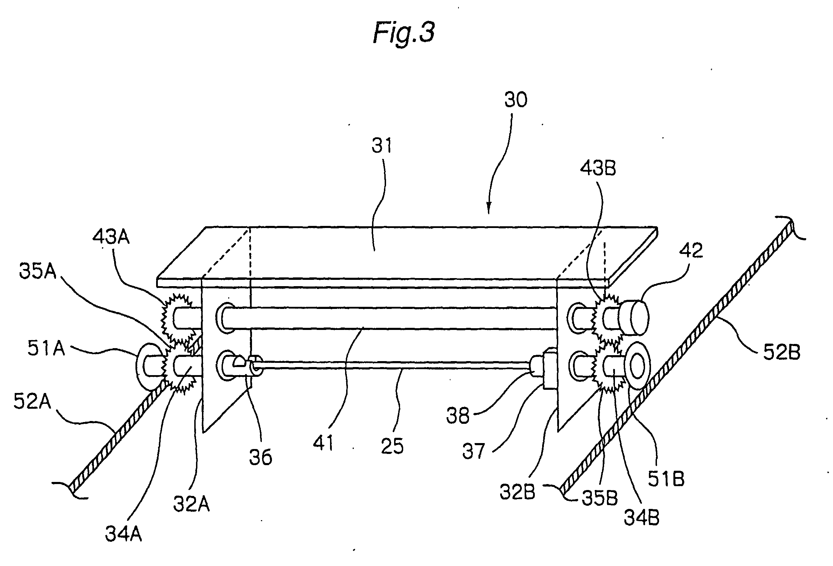

As shown in Figs. 1 and 3, each retaining jig 30 has a plate-shaped base 31 extending in a direction (horizontal direction in Fig. 1) perpendicular to the longitudinal direction of the electroforming tank 1. The retaining jig 30 further has a pair of side plates 32A and 32B secured to the base 31 at respective positions near both ends of the base 31. The side plates 32A and 32B are arranged to lie just at left and right sides, respectively, of the electroforming tank 1 when the retaining jig 30 is positioned directly above the electroforming tank 1.

Bus retaining shafts 34A and 34B are supported by the side plates 32A and 32B, respectively, so as to be rotatable about their own axes. Both end portions of a bus 25 are retained by the bus retaining shafts 34A and 34B. Thus, the bus 25 is placed in the overflow layer 10 overlying the electroforming tank 1.

More specifically, an electrode 36 is provided on an end of the bus retaining shaft 34A that faces toward the electroforming tank 1. One end of the bus 25 is secured to the electrode 36. Meanwhile, a tension device 37 is provided on an end of the bus retaining shaft 34B that faces toward the electroforming tank 1. The tension device 37 has an electrode 38 to which the other end of the bus 25 is secured, and a spring 39. The spring 39 is interposed between the electrode 38 and the distal end of the bus retaining shaft 34B to apply a predetermined tension to the bus 25 held between the electrode 36 and the electrode 38.

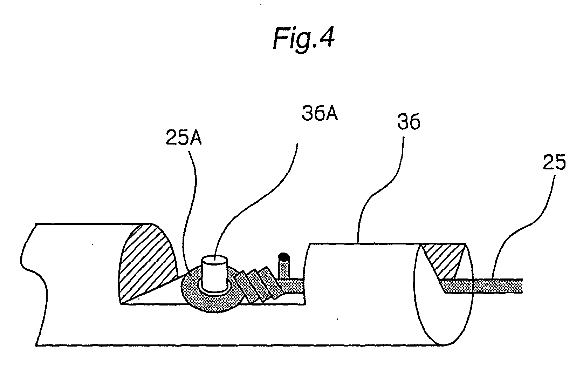

Fig. 4 shows the details of fitting of the bus 25 to the electrode 36. As illustrated in the figure, the bus 25 has an annular hook portion 25A formed at an end thereof. The hook portion 25A is engaged with a fitting pin 36A of the electrode 36, whereby the bus 25 is fitted to the electrode 26. It should be noted that fitting of the bus 25 to the electrode 38 is effected in the same way. Therefore, a description thereof is omitted.

As shown in Figs. 1 and 3, a rotating shaft 41 is supported by the side plates 32A and 32B so as to be rotatable about its own axis. The rotating shaft 41 is driven to rotate by a driving motor 42. Gears 43A and 43B are secured to the outer periphery of the rotating shaft 41. The gear 43A is in mesh with a gear 35A secured to the outer periphery of the bus retaining shaft 34A. The gear 43B is in mesh with a gear 35B secured to the outer periphery of the bus retaining shaft 34B. Thus, rotation of the rotating shaft 41 is transmitted to the bus retaining shafts 34A and 34B, thereby allowing the bus 25 retained by the bus retaining shafts 34A and 34B to rotate about its own axis. Rotation of the bus 25 is controlled to an appropriate value, e.g. 15 rpm or lower, during electroforming. The rotation of the bus 25 allows an improvement in uniformity of the electrolytically deposited metal on the periphery of the bus 25.

Electrically conductive electrode rollers 51A and 51B are secured to the bus retaining shafts 34A and 34B, respectively. When the retaining jig 30 is positioned directly above the electroforming tank 1, the electrode rollers 51A and 51B come in contact with electrically conductive electrode wires 52A and 52B stretched at the left and right sides of the inner tank 1. Both the electrode wires 52A and 52B are connected to the minus electrode of a programmable power supply 53. Thus, the electrode rollers 51A and 51B are electrically connected to the minus electrode of the programmable power supply 53.

The bus retaining shaft 34A is provided with an electrically conductive member (e.g. an electric wire, not shown) for electrically connecting the electrode roller 51A to the electrode 36. Similarly, the bus retaining shaft 34B is provided with an electrically conductive member (e.g. an electric wire, not shown) for electrically connecting the electrode roller 51B to the spring 39 and the electrode 38. In addition, the electrically conductive members of the bus retaining shafts 34A and 34B are provided with switching devices (not shown), respectively, so that the electrical connection between the electrode roller 51A and the electrode 36 through the electrically conductive member and the electrical connection between the electrode roller 51B on the one hand and the spring 39 and the electrode 38 on the other through the electrically conductive member can be ON-OFF controlled by the respective switching devices.

With the above-described arrangement, the electrodes 36 and 38 are electrically connected to the minus electrode of the programmable power supply 53 to serve as cathode electrodes. The electrical connection is ON-OFF controlled for each retaining jig 30 by the switching devices. In other words, voltage application to the buses 25 can be ON-OFF controlled for each individual bus 25 in the overflow layer 10. As a result, electroforming performed on each bus 25 can be controlled individually.

On the other hand, as shown in Figs. 134A, 34B and 2, an anode electrode 54 connected to the plus electrode of the programmable power supply 53 is disposed on the bottom of the electroforming tank 1. The anode electrode 54 is formed by accommodating metal pellets (e.g. nickel pellets) for electroforming in a mesh-shaped or perforated casing made, for example, of titanium steel.

The programmable power supply 53 applies a voltage between the anode electrode 54 and the cathode electrodes 36 and 38 so that the current density produced in the overflow layer 10 is maintained at an appropriate value (e.g. 3 to 12 A/dm²; 3 to 4 A/dm² when importance is attached to the degree of roundness of the electroformed piece). Consequently, a metal is electrolytically deposited on the periphery of the bus 25, and thus an electroformed piece is formed.

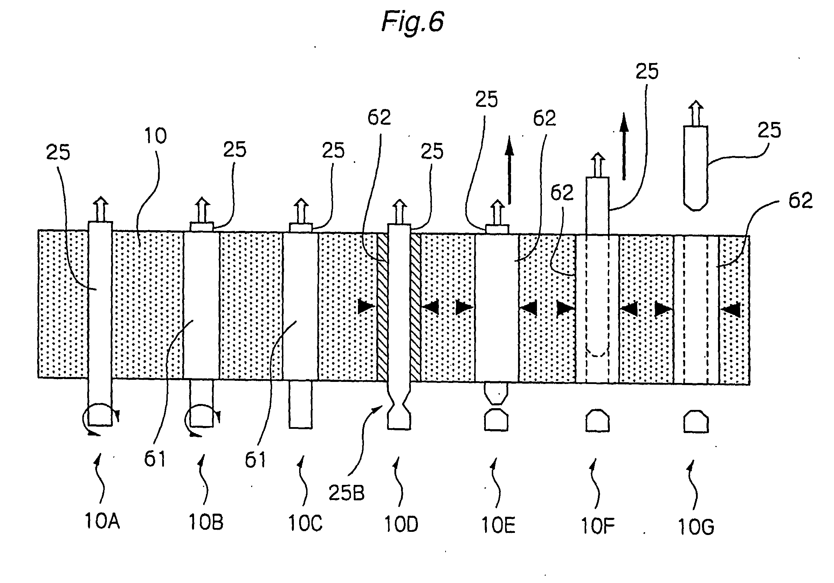

It should be noted that the electroforming apparatus is provided with a clamp device, a cut-off machining mechanism for cutting off each bus 25, and a removal mechanism for removing the bus 25 (see Fig. 6). The clamp device clamps the electroformed piece in the overflow layer 10. The clamp device allows the cut-off machining mechanism to cut off the bus 25 clamped by the clamp device. The bus 25 is removed from the electroformed piece by the removal mechanism. That is, in this electroforming apparatus, the bus 25 and the electroformed piece are separated from each other in the electroforming fluid 3. Thus, separation of the bus 25 and the electroformed piece will not be hindered by a change in volumetric capacity of the bus 25 and the electroformed piece or by solidification on drying of the agents attached to the bus 25 and the electroformed piece, which would otherwise occur owing to taking out the bus 25 and the electroformed piece from the electroforming fluid 3. Accordingly, the operation of removing the bus 25 can be performed smoothly.

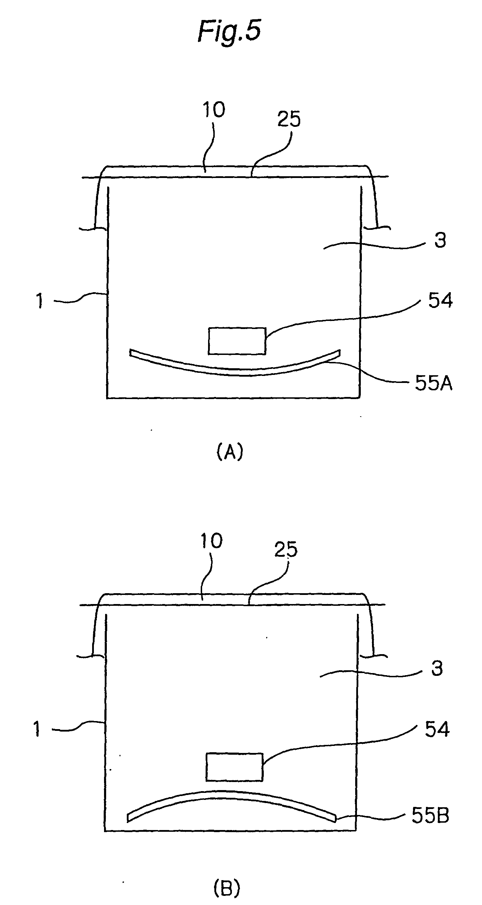

In addition, as shown in Figs. 5(A) and 5(B), a reflector 55A or 55B may be provided under the anode electrode 54. The reflector 55A or 55B is formed from a heat-resistant resin material, for example, to reflect the electric current from the anode electrode 54. Thus, the electric current is allowed to spread uniformly even into a region in the electroforming tank 1 where the current density is likely to decrease, whereby the current density distribution in the electroforming tank 1 is made uniform. As a result, the current density produced in the overflow layer 10 can be controlled appropriately, and it is possible to improve the uniformity of electrolytic deposition on the bus 25.

Fig. 5(A) shows an arrangement in which a concave reflector 55A is used. Fig. 5(B) shows an arrangement in which a convex reflector 55B is used. However, the configuration of the reflector may be changed in a variety of ways according to various conditions, e.g. the configuration of the electroforming tank 1, in addition to the illustrated examples. For example, the reflector 55A or 55B may be provided with fine recesses and projections (corrugation).

Next, the electroforming method carried out by the electroforming apparatus of this embodiment will be described according to Fig. 6. It should be noted that in Fig. 6, different positions in the overflow layer 10 are indicated by 10A to 10G.

First, at the loading position X of the jig transfer device 20, a bus 25 is loaded onto a retaining jig 30. The bus 25 loaded on the retaining jig 30 is fed into the overflow layer 10 by circulation of the belt 23.

The bus 25 fed into the overflow layer 10 moves in the overflow layer 10 successively from 10A to 10G while rotating at a predetermined rotational speed. In addition, an appropriate voltage is applied between the cathode electrodes 36 and 38 on the one hand and the anode electrode 54 on the other so that an appropriate current density is produced in the overflow layer 10. Consequently, at the positions 10A, 10B and 10C, an electrolytically deposited metal 61 grows on the periphery of the bus 25 by electroforming.

When the outer diameter of the electrolytically deposited metal 61 on the periphery of the bus 25 has reached the desired diameter to form an electroformed piece 62, the voltage application to the bus 25 is stopped to suspend the rotation of the bus 25 about its own axis. Then, as shown at the position 10D, the electroformed piece 62 is clamped with the clamp device (not shown), and a cut position 25B at an end of the bus 25 is subjected to double tapering by machining (e.g. grinding or stamping) with the cut-off machining mechanism. It should be noted that the solid black triangular marks in Fig. 6 show that the electroformed piece 62 is gripped with the clamp device.

Subsequently, at the position 10E, the bus 25 is pulled away from the cut position 25B with the removal mechanism (not shown). Consequently, the bus 25 is cut off at the cut position 25B and pulled out from the electroformed piece 62. At the positions 10F and 10G, the way in which the bus 25 is pulled out from the electroformed piece 62 is shown.

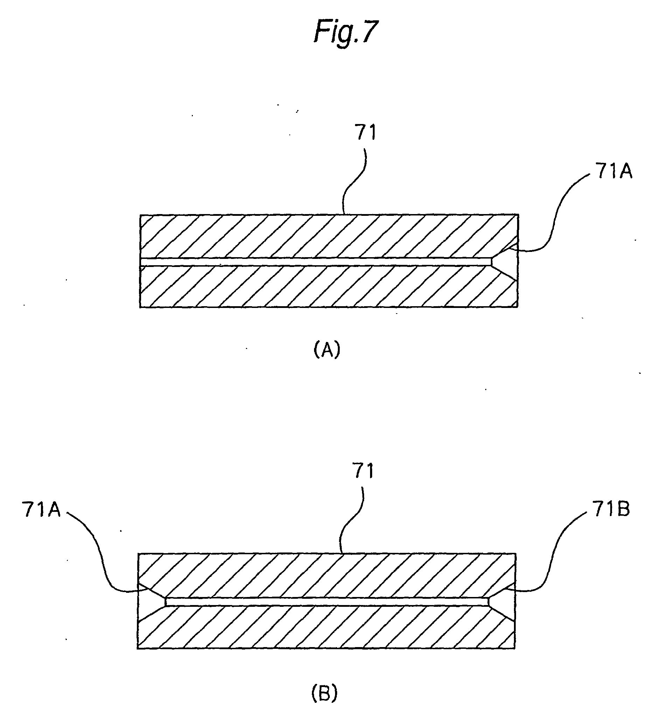

Upon completion of the formation of an electroformed piece 62 as a tubular member as described above, the electroformed piece 62 is taken out from the overflow layer 10 and subjected to cleaning and drying. Further, according to need, an end of the hollow portion of the electroformed piece 62 is subjected to spot facing. Thus, a ferrule 71 having a spot-faced portion 71A as shown in Fig. 7(A), by way of example, is obtained. Alternatively, a ferrule 72 having spot-faced portions 72A and 72B at both ends is obtained.

As has been stated above, with the electroforming apparatus and electroforming method according to this embodiment, electroforming is carried out in the overflow layer 10. Therefore, the current density around the bus 25 is stabilized, so that an electroformed piece 62 of high accuracy can be obtained. Accordingly, it is possible to markedly improve the ferrule 71 obtained as a result of electroforming in the roundness of the sections of the external shape and the hollow portion and also in the coaxiality between the external shape and the hollow portion of the ferrule 71. In addition, dimensional errors of the outer diameter of the ferrule 71 and the inner diameter of the hollow portion can be reduced to extremely small values (e.g. not more than 0.1 µm). Further, because a plurality of electroformed pieces obtained by the electroforming apparatus are formed around buses 25 moving along the overflow layer 10, the electroformed pieces can be formed under the same conditions. Accordingly, it is possible to obtain electroformed pieces of uniform quality. Furthermore, because the voltage application to the plurality of buses 25 can be ON-OFF controlled for each bus 25, the control of electroforming can be effected appropriately for each bus 25. Accordingly, the accuracy of electroforming can be improved remarkably. In addition, because none of the bus (25) retaining portions are immersed in the electroforming fluid 3, it is possible to minimize the amount of impurities generated in the electrolyte 3. Further, the retaining portions per se can be prevented from becoming deteriorated. Furthermore, because there is no possibility that the electrolyte 3 attached to the retaining members will be carried out of the electrolytic tank 1, the electrolyte 3 will not be lost uselessly. In addition, because the cathode electrodes 36 and 38 are not immersed in the electrolyte 3 either, the maintenance of the electrodes is also facilitated. Further, because the electrolyte 3 overflowing the electrolytic tank 1 is collected into the outer tank 2 and then filtered, the electrolyte 3 can be filtered rationally and at low costs. Furthermore, because the electroformed piece 62 and the bus 25 are separated from each other in the electrolyte 3, the separation can be executed smoothly.

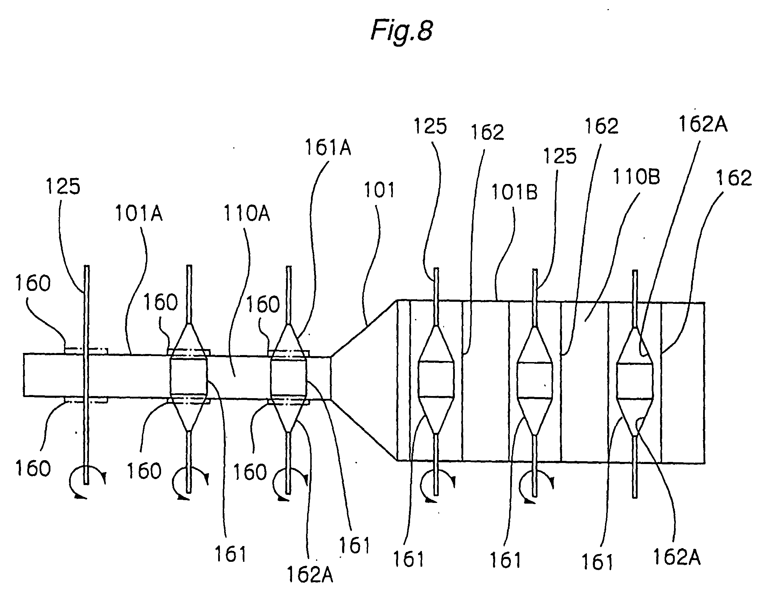

Fig. 8 shows an electroforming apparatus according to a second embodiment of the present invention.

As illustrated in the figure, an electroforming tank 101 in this embodiment has a primary electroforming section 101A and a secondary electroforming section 101B, which have different widths. A bus 125 fed into an overflow layer 110A overlying the primary electroforming section 101A of the electroforming tank 101 moves from the primary electroforming section 101A with a relatively narrow width toward the secondary electroforming section 101B with a relatively wide width.

Control plates 160 are provided at both sides of the primary electroforming section 101A. The control plates 160 block the electrolyte 103 flowing out sideward from the overflow layer 110A overlying the primary electroforming section 101A, thereby controlling the amount of electrolyte 103 applied to the bus 125 at both sides of the overflow layer 110A.

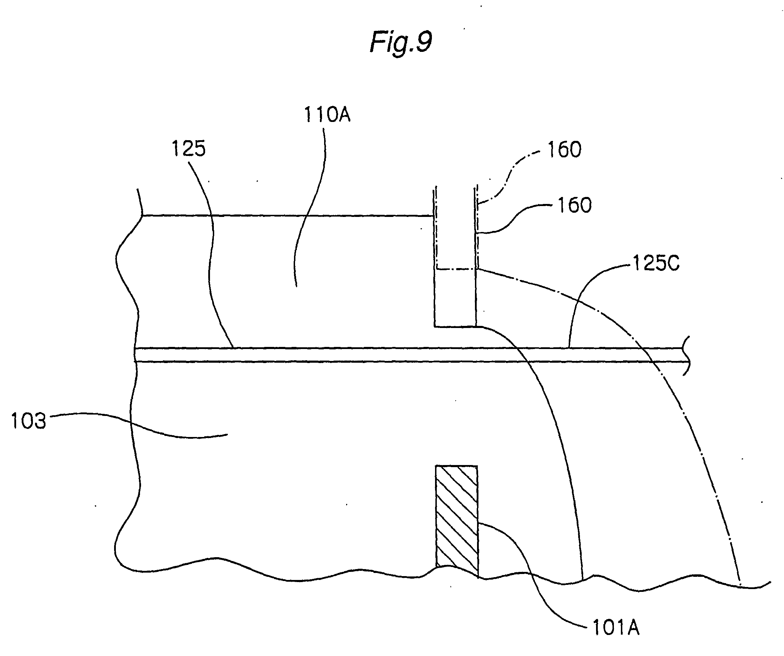

Fig. 9 shows the control of the electrolyte flow rate by the control plates 160 in detail. As illustrated in the figure, each control plate 160 is placed in a substantially upright position directly above the side wall of the primary electroforming section 101A of the electroforming tank 101 and allowed to move vertically by drive means (not shown) controlled by a controller. In the figure, two different positions of the control plate 160 are shown by the solid and chain lines, respectively.

In this embodiment, electroforming performed on a portion (exposed portion 125C) of the bus 125 extending from each side of the primary electroforming section 101A is controlled by the vertical movement of the control plate 160. More specifically, when the control plate 160 is at a relatively low position as shown by the solid line in the figure, the flow rate of electrolyte 103 flowing out sideward from the overflow layer 110A is controlled. Consequently, the area of a region of the exposed portion 125C over which the electrolyte 103 flows is relatively reduced. On the other hand, when the control plate 160 is at a relatively high position as shown by the chain line in the figure, a large amount of electrolyte 103 is allowed to flow out sideward from the overflow layer 110A. Consequently, the area of a region of the exposed portion 125C where the electrolyte 103 flows becomes relatively large. Thus, the area of a region of the exposed portion 125C where the electrolyte 103 flows is controlled by the vertical movement of the control plate 160 as stated above, thereby controlling the amount of electrolytically deposited metal on the periphery of the exposed portion 125C. Consequently, the electroformed piece formed around the periphery of the exposed portion 125C can be shaped into a desired configuration (e.g. a tapered configuration).

As shown in Fig. 8, a primarily electroformed piece 161 formed in the overflow layer 110A overlying the primary electroforming section 101A has tapered portions 161A formed at both ends thereof. The primarily electroformed piece 161 is once taken out from the electrolyte 103 so that an oxide film is formed on the periphery of the primarily electroformed piece 161.

Thereafter, the primarily electroformed piece 161, together with the bus 125, is fed into an overflow layer 110B overlying the secondary electroforming section 101B, where secondary electroforming is carried out with the primarily electroformed piece 161 and the bus 125 used as a pattern member. Thus, a tubular member having a hollow portion patterned on the primarily electroformed piece 161 and the bus 125 is obtained as a secondarily electroformed piece 162. The hollow portion of the secondarily electroformed piece 162 has highly accurately formed spot-faced portions 162A patterned on the tapered portions 161A of the primarily electroformed piece 161.

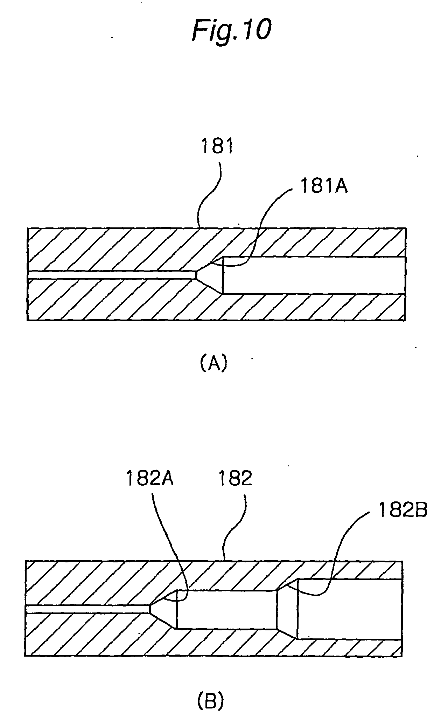

The secondarily electroformed piece 162 is subjected to cut-off machining (cutting or grinding) at an approximately central portion thereof with a cut-off machining mechanism (not shown) within the overflow layer 101B, and the two halves of the secondarily electroformed piece 162 are pulled out toward both sides with a pulling mechanism (not shown) within the overflow layer 110B. In this way, two ferrules 181 each having one spot-faced portion 181A as shown in Fig. 10(A) are obtained. Thus, in this embodiment also, the electroformed piece and the pattern member are separated from each other in the electrolyte. Therefore, the separation can be executed smoothly. Accordingly, the yield of the separating operation (the rate at which the separating operation can be effected correctly) increases.

Although in this embodiment the electroforming apparatus has the primary electroforming section 101A and the secondary electroforming section 101B to perform electroforming in two steps, it should be noted that the present invention is not limited to the described embodiment, and electroforming may be performed in three or more steps. For example, the arrangement may be such that a tertiary electroforming section is provided next to the secondary electroforming section, and the secondarily electroformed piece is also shaped with control plates at both sides of the secondary electroforming section. Then, tertiary electroforming is performed on the shaped secondarily electroformed piece. With this arrangement, the resulting ferrule 182 has spot-faced portions 182A and 182B formed in a two-step structure as shown in Fig. 10(B). Similarly, if an (n-1)th-order electroformed piece is subjected to nth-order electroforming in an n th-order electroforming section, it is possible to form a ferrule having spot-faced portions formed in an (n-1)-step structure.

As has been stated above, according to this embodiment, a primarily electroformed piece 161 formed in the primary electroforming section 110A is used as a pattern member to form a secondarily electroformed piece 162 in the secondarily electroforming section 110B. Therefore, a ferrule having a desired configuration (e.g. a spot-faced portion 181A) in a hollow portion thereof can be produced easily and accurately. In addition, it becomes unnecessary to form a spot-faced portion by fabrication process. Accordingly, the ferrule production cost can be reduced.

## Claims

1. An electroforming apparatus comprising:
an electroforming tank having an opening at a top thereof;
electrolyte supply means for supplying an electrolyte for electroforming into the electroforming tank;
an overflow layer formed over the opening of said electroforming tank by the electrolyte overflowing from said opening;
positioning means for positioning a pattern member for electroforming in the overflow layer;
a first electrode connected to said pattern member;
a second electrode provided in said electroforming tank; and
a power supply for applying a voltage between said first electrode and said second electrode.

2. An electroforming apparatus according to claim 1, wherein said positioning means has a retaining portion for retaining said pattern member, said retaining portion being provided outside said overflow layer.

3. An electroforming apparatus according to claim 2, wherein said first electrode is provided on the retaining portion of said positioning means.

4. An electroforming apparatus according to any one of claims 1 to 3, wherein said positioning means retains a plurality of said pattern members and moves the pattern members sequentially along said overflow layer to perform electroforming.

5. An electroforming apparatus according to claim 4, wherein electrical connection between said first electrode and said pattern members can be ON-OFF controlled for each pattern member.

6. An electroforming apparatus according to any one of claims 1 to 5, further comprising:
rotating means for rotating said pattern member about its own axis.

7. An electroforming apparatus according to any one of claims 1 to 6, further comprising:
adjusting means for adjusting a tilt of said electroforming tank.

8. An electroforming apparatus according to any one of claims 1 to 7, further comprising:
collecting means for collecting the electrolyte overflowing said electroforming tank; and
filter means for filtering the electrolyte collected by said collecting means;
wherein said electrolyte supply means supplies said electroforming tank with the electrolyte filtered through said filter means.

9. An electroforming apparatus according to claim 8, wherein said collecting means has an outer tank accommodating said electroforming tank.

10. An electroforming apparatus according to any one of claims 1 to 9, further comprising:
shaping means for shaping an electroformed piece formed around a periphery of the pattern member at an end of said overflow layer by controlling a flow rate of the electrolyte at the end of said overflow layer.

11. An electroforming apparatus according to claim 10, wherein said shaping means has a control plate for blocking flow of said electrolyte.

12. An electroforming apparatus according to claim 10 or 11, wherein the electroformed piece is shaped into a predetermined configuration by said shaping means, and electroforming is further performed by using said electroformed piece as a pattern member.

13. An electroforming apparatus according to any one of claims 1 to 12, wherein the electroformed piece formed around the periphery of said pattern member can be separated from said pattern member within the electrolyte.

14. An electroforming apparatus according to any one of claims 1 to 13, further comprising:
a reflector provided under said second electrode.

15. An electroformed piece formed by the electroforming apparatus according to any one of claims 1 to 14.

16. A tubular member for an optical fiber connector terminal, said tubular member being formed by the electroforming apparatus according to any one of claims 1 to 14.

17. An electroforming method wherein an overflow layer is formed by an electrolyte overflowing an electroforming tank, and electroforming is performed in the overflow layer.

18. An electroforming apparatus according to claim 17, wherein a pattern member for electroforming is retained outside said overflow layer.

19. An electroforming method according to claim 17 or 18, wherein a plurality of pattern members for electroforming are sequentially moved along said overflow layer to perform electroforming.

20. An electroforming method according to any one of claims 17 to 19, wherein the pattern member for electroforming is rotated about its own axis to perform electroforming.

21. An electroforming method according to any one of claims 17 to 20, wherein the electrolyte overflowing said electroforming tank is collected, and the electrolyte collected is filtered, and further the electrolyte filtered is supplied into said electroforming tank to form said overflow layer.

22. An electroforming method according to any one of claims 17 to 21, wherein an electroformed piece formed at an end of said overflow layer is shaped by controlling a flow rate of the electrolyte at the end of said overflow layer.

23. An electroforming method according to claim 22, wherein the electroformed piece is shaped into a predetermined configuration, and electroforming is further performed by using the electroformed piece shaped as a pattern member.

24. An electroforming method according to any one of claims 17 to 23, wherein the electroformed piece formed around a periphery of the pattern member is separated from said pattern member within the electrolyte.

25. An electroformed piece formed by the electroforming method according to any one of claims 17 to 24.

26. A tubular member for an optical fiber connector terminal, said tubular member being formed by the electroforming method according to any one of claims 17 to 24.
